# EUROPEAN PATENT APPLICATION

(11) **EP 4 765 694 A1**
(43) Date of publication of application: **24.06.2026**
(21) Application number: 24862045.2
(22) Date of filing: 05.09.2024
(51) Int. Cl.: H04L 1/00

(54) **ENCODING METHOD, APPARATUS AND SYSTEM, AND CHIP**

(30) Priority: 06.09.2023 CN 202311148553
(71) Applicant: HUAWEI TECHNOLOGIES CO., LTD., Shenzhen 518129 (CN)
(72) Inventor: PAN, Dongcheng, Shenzhen, Guangdong 518129 (CN); ZHANG, Tingting, Shenzhen, Guangdong 518129 (CN); ZHANG, Sen, Shenzhen, Guangdong 518129 (CN); ZHUANG, Yan, Shenzhen, Guangdong 518129 (CN); WANG, Renlei, Shenzhen, Guangdong 518129 (CN)
(74) Representative: Maiwald GmbH
(86) International application number: PCT/CN2024/117264
(87) International publication number: WO 2025/051207

(57) **Abstract**

This application discloses an encoding method, an apparatus, a system, and a chip, and relates to the field of communication technologies. In the method, a block pair is sent through one serial channel, where the block pair includes a first block and a second block, a length of the first block is the same as a length of the second block, and the first block indicates a type of the second block. The type of the second block is indicated by the first block, and the second block does not need to include content indicating the type of the second block. Therefore, the second block can carry other content other than the content indicating the type of the second block, and the second block has high scalability. In addition, the length of the first block is the same as the length of the second block. Therefore, the first block and the second block may include a same quantity of bits of a same signal, or the first block and the second block include bits of different signals, but a quantity of bits of the signal included in the first block is the same as a quantity of bits of the signal included in the second block. Transmission of the block pair is performed through one serial channel, so that a quantity of pins of the serial channel may be small. The serial channel in the method may be implemented based on an MII. Therefore, the method may be applied to an MII scenario.

## Description

This application claims priority to Chinese Patent Application No. 202311148553.7, filed on September 6, 2023 and entitled "ENCODING METHOD, APPARATUS, SYSTEM, AND CHIP", which is incorporated herein by reference in its entirety.

### TECHNICAL FIELD

This application relates to the field of communication technologies, and in particular, to an encoding method, an apparatus, a system, and a chip.

### BACKGROUND

In the field of communication technologies, a signal transmitting end may encode a signal to obtain an encoding result, and transmit the encoding result to a signal receiving end. The signal receiving end decodes the received encoding result to restore the signal.

### SUMMARY

This application provides an encoding scheme, a decoding method, an apparatus, a system, and a chip, to implement transmission of a signal in a form of a block pair.

According to a first aspect, an encoding method is provided. The method includes: sending a block pair through one serial channel, where the block pair includes a first block and a second block, a length of the first block is the same as a length of the second block, and the first block indicates a type of the second block. In the method, the type of the second block is indicated by the first block, and the second block does not need to include content indicating the type of the second block. Therefore, the second block can carry other content other than the content indicating the type of the second block, and the second block has high scalability. In addition, the length of the first block is the same as the length of the second block. Therefore, the first block and the second block may include a same quantity of bits of a same signal, or the first block and the second block include bits of different signals, but a quantity of bits of the signal included in the first block is the same as a quantity of bits of the signal included in the second block. The block pair is sent through one serial channel, so that a quantity of pins of the serial channel may be small. In addition, the serial channel in the method may be implemented based on a media independent interface (media independent interface, MII). Therefore, the method may be applied to an MII scenario.

For example, sending the block pair through one serial channel includes: sending the block pair from a medium access control (medium access control, MAC) layer to a physical layer (physical layer, PHY) through one serial channel.

For example, sending the block pair through one serial channel includes: sending the block pair from a PHY to a MAC layer through one serial channel.

According to a second aspect, a decoding method is provided. The method includes: receiving a block pair through one serial channel, where the block pair includes a first block and a second block, a length of the first block is the same as a length of the second block, and the first block indicates a type of the second block. The type of the second block is indicated by the first block, and the second block does not need to include content indicating the type of the second block. Therefore, the second block can carry other content other than the content indicating the type of the second block, and the second block has high scalability. In addition, the length of the first block is the same as the length of the second block. Therefore, the first block and the second block may include a same quantity of bits of a same signal, or the first block and the second block include bits of different signals, but a quantity of bits of the signal included in the first block is the same as a quantity of bits of the signal included in the second block. The block pair is received through one serial channel, so that a quantity of pins of the serial channel may be small. In addition, the serial channel in the method may be implemented based on an MII. Therefore, the method may be applied to an MII scenario.

For example, receiving the block pair through one serial channel includes: receiving, from a MAC layer, the block pair sent by a PHY through one serial channel.

For example, sending the block pair through one serial channel includes: receiving, from a PHY, the block pair sent by a MAC layer through one serial channel.

In a possible implementation of the first aspect or the second aspect, that the first block indicates the type of the second block includes but is not limited to at least one of the following cases: If the first block is a data block, it indicates that the second block is a data block; if the first block is a control block with a value of X, it indicates that the second block is a control block; if the first block is a control block with a value of Y, it indicates that the second block is a management block; if the first block is a control block with a value of Z, it indicates that the second block is a data block; and if the first block is a control block with a value of W, it indicates that the second block indicates collision detection (collision detected, COL) and carrier sense (carrier sense, CRS) in a bitmap manner. X may be referred to as a first value, Y may be referred to as a second value, Z may be referred to as a third value, and W may be referred to as a fourth value.

An encoding scheme is flexible and diverse through one or more of the foregoing cases in which the first block indicates the type of the second block.

In some possible implementations of the first aspect or the second aspect, the first block is a J code block, and the second block is a K code block; or the first block is a T code block, and the second block is an R code block. In some possible implementations of the first aspect or the second aspect, when the first block is a J code block, and the second block is a K code block, the block pair can indicate a start-of-stream delimiter. When the first block is a T code block, and the second block is an R code block, the code block can indicate an end-of-stream delimiter.

In some possible implementations of the first aspect or the second aspect, the second block includes a management signal. Therefore, transmission of the management signal can be implemented through transmission of the block pair.

For example, the management signal occupies 1 bit.

For example, both the length of the first block and the length of the second block are 5 bits. Therefore, the first block and the second block each may be obtained based on bits of a transmit data (transmit data, TXD) signal of one cycle.

In some possible implementations of the first aspect or the second aspect, the first block is obtained through encoding using a 4B/5B scheme. In another possible implementation, the first block is obtained through encoding using an 8B/10B scheme. Therefore, an encoding scheme of the first block is flexible.

For example, the second block includes a management signal, and the management signal occupies 1 bit or 2 bits. Therefore, in the second block, a manner of carrying the management signal is flexible.

For example, the first block is a data block, and the second block includes a 4-bit data signal and a 1-bit management signal; or the first block is a control block, and the second block includes a 4-bit data signal and a 1-bit management signal; or the first block is a control block, and the second block includes a 4-bit control signal and a 1-bit management signal. Because the second block includes only a 1-bit management signal, there are a small quantity of bit positions, in the second block, for transmission of the management signal. When transmission of the management signal is implemented, transmission efficiency of a data signal or a data signal is high.

In some possible implementations of the first aspect or the second aspect, the serial channel is implemented based on the MII.

According to a third aspect, a data structure is provided. The data structure includes the block pair according to any one of the first aspect or the possible implementations of the first aspect.

According to a fourth aspect, an encoding apparatus is provided. The apparatus includes: a transceiver module, configured to perform a receiving and/or sending related operation according to any one of the first aspect or the possible implementations of the first aspect; and a processing module, configured to perform another operation other than the receiving and/or sending related operation according to any one of the first aspect or the possible implementations of the first aspect.

According to a fifth aspect, a decoding apparatus is provided. The apparatus includes: a transceiver module, configured to perform a receiving and/or sending related operation according to any one of the second aspect or the possible implementations of the second aspect; and a processing module, configured to perform another operation other than the receiving and/or sending related operation according to any one of the second aspect or the possible implementations of the second aspect.

According to a sixth aspect, an encoding apparatus is provided. The apparatus includes: an encoding module, configured to send a block pair through one serial channel, where the block pair includes a first block and a second block, a length of the first block is the same as a length of the second block, and the first block indicates a type of the second block.

For example, that the first block indicates the type of the second block includes: If the first block is a data block, it indicates that the second block is a data block.

For example, that the first block indicates the type of the second block includes: If the first block is a control block with a value of a first value, it indicates that the second block is a control block.

For example, that the first block indicates the type of the second block includes: If the first block is a control block with a value of a second value, it indicates that the second block is a management block.

For example, that the first block indicates the type of the second block includes: If the first block is a control block with a value of a third value, it indicates that the second block is a data block.

For example, that the first block indicates the type of the second block includes: If the first block is a control block with a value of a fourth value, it indicates that the second block indicates COL and CRS in a bitmap manner.

For example, the first block is a J code block, and the second block is a K code block; or the first block is a T code block, and the second block is an R code block.

For example, a block pair including the J code block and the K code block indicates an SSD, and a block pair including the T code block and the R code block indicates an ESD.

For example, the second block includes a management signal.

For example, the management signal occupies 1 bit.

For example, both the length of the first block and the length of the second block are 5 bits.

For example, the first block is obtained through encoding using a 4B/5B scheme.

For example, the first block is obtained through encoding using an 8B/10B scheme.

For example, the second block includes a management signal, and the management signal occupies 1 bit or 2 bits.

For example, the first block is a data block, and the second block includes a 4-bit data signal and a 1-bit management signal; or the first block is a control block, and the second block includes a 4-bit data signal and a 1-bit management signal; or the first block is a control block, and the second block includes a 4-bit control signal and a 1-bit management signal.

For example, the serial channel is implemented based on an MII.

For example, the encoding module is configured to send the block pair from a MAC layer to a PHY through one serial channel.

For example, the encoding module is configured to send the block pair from a PHY to a MAC layer through one serial channel.

According to a seventh aspect, a decoding apparatus is provided. The apparatus includes: a decoding module, configured to receive a block pair through one serial channel, where the block pair includes a first block and a second block, a length of the first block is the same as a length of the second block, and the first block indicates a type of the second block.

For example, that the first block indicates the type of the second block includes: If the first block is a data block, it indicates that the second block is a data block.

For example, that the first block indicates the type of the second block includes: If the first block is a control block with a value of a first value, it indicates that the second block is a control block.

For example, that the first block indicates the type of the second block includes: If the first block is a control block with a value of a second value, it indicates that the second block is a management block.

For example, that the first block indicates the type of the second block includes: If the first block is a control block with a value of a third value, it indicates that the second block is a data block.

For example, that the first block indicates the type of the second block includes: If the first block is a control block with a value of a fourth value, it indicates that the second block indicates COL and CRS in a bitmap manner.

For example, the first block is a J code block, and the second block is a K code block; or the first block is a T code block, and the second block is an R code block.

For example, a block pair including the J code block and the K code block indicates an SSD, and a block pair including the T code block and the R code block indicates an ESD.

For example, the second block includes a management signal.

For example, the management signal occupies 1 bit.

For example, both the length of the first block and the length of the second block are 5 bits.

For example, the first block is obtained through encoding using a 4B/5B scheme.

For example, the first block is obtained through encoding using an 8B/10B scheme.

For example, the second block includes a management signal, and the management signal occupies 1 bit or 2 bits.

For example, the first block is a data block, and the second block includes a 4-bit data signal and a 1-bit management signal; or the first block is a control block, and the second block includes a 4-bit data signal and a 1-bit management signal; or the first block is a control block, and the second block includes a 4-bit control signal and a 1-bit management signal.

For example, the serial channel is implemented based on an MII.

For example, the decoding module is configured to receive, from a MAC layer, the block pair sent by a PHY through one serial channel.

For example, the decoding module is configured to receive, from a PHY, the block pair sent by a MAC layer through one serial channel.

According to an eighth aspect, a communication apparatus is provided. The apparatus includes a MAC layer circuit, where the MAC layer circuit is configured to perform the encoding method according to any one of the possible implementations of the first aspect or the decoding method according to any one of the possible implementations of the second aspect.

According to a ninth aspect, another communication apparatus is provided. The apparatus includes: a PHY circuit, configured to perform the encoding method according to any one of the possible implementations of the first aspect or the decoding method according to any one of the possible implementations of the second aspect.

The encoding apparatus, the decoding apparatus, or the communication apparatus according to any one of the fourth aspect to the ninth aspect may be a chip or a communication device.

According to a tenth aspect, a communication system is provided. The communication system includes a MAC layer circuit and a PHY circuit. The MAC layer circuit is configured to perform the encoding method according to any one of the possible implementations of the first aspect, and the PHY circuit is configured to perform the decoding method according to any one of the possible implementations of the second aspect; or the PHY circuit is configured to perform the encoding method according to any one of the possible implementations of the first aspect, and the MAC layer circuit is configured to perform the decoding method according to any one of the possible implementations of the second aspect. The communication system may be implemented by using a chip or a communication device.

According to an eleventh aspect, a chip is provided. The chip includes a MAC layer circuit, where the MAC layer circuit is configured to perform the encoding method according to any one of the possible implementations of the first aspect or the decoding method according to any one of the possible implementations of the second aspect.

According to a twelfth aspect, another chip is provided. The chip includes: a PHY circuit, configured to perform the encoding method according to any one of the possible implementations of the first aspect or the decoding method according to any one of the possible implementations of the second aspect.

It should be understood that, for beneficial effects achieved by the technical solutions according to the third aspect to the twelfth aspect of this application and the corresponding possible implementations, refer to technical effects of the technical solutions according to the first aspect and the second aspect and the corresponding possible implementations of the first aspect and the second aspect. Details are not described herein again.

### BRIEF DESCRIPTION OF DRAWINGS

FIG. 1 is a diagram of an implementation environment according to an embodiment of this application;
FIG. 2 is a flowchart of an encoding method according to an embodiment of this application;
FIG. 3 is a diagram of a block pair according to an embodiment of this application;
FIG. 4 is a diagram of transmission of an Ethernet frame according to an embodiment of this application;
FIG. 5 is a diagram of misidentification according to an embodiment of this application;
FIG. 6 is a diagram of a transmission process of a block pair according to an embodiment of this application;
FIG. 7 is a diagram of another transmission process of a block pair according to an embodiment of this application;
FIG. 8 is a diagram of still another transmission process of a block pair according to an embodiment of this application;
FIG. 9 is a diagram of still another transmission process of a block pair according to an embodiment of this application;
FIG. 10 is a diagram of another block pair according to an embodiment of this application;
FIG. 11 is a diagram of a transmission process of an H.sig code block according to an embodiment of this application;
FIG. 12 is a diagram of another transmission process of an H.sig code block according to an embodiment of this application;
FIG. 13 is a diagram of still another transmission process of an H.sig code block according to an embodiment of this application;
FIG. 14 is a flowchart of a decoding method according to an embodiment of this application;
FIG. 15 is a diagram of a process of inputting a block pair into an RS according to an embodiment of this application;
FIG. 16 is a diagram of a process of synchronization of a management channel according to an embodiment of this application;
FIG. 17 is a diagram of a process of synchronization of a data channel according to an embodiment of this application;
FIG. 18 is a diagram of a structure of an encoding apparatus according to an embodiment of this application;
FIG. 19 is a diagram of a structure of a decoding apparatus according to an embodiment of this application;
FIG. 20 is a diagram of a structure of a computer system according to an embodiment of this application; and
FIG. 21 is a diagram of a structure of another computer system according to an embodiment of this application.

### DESCRIPTION OF EMBODIMENTS

In the field of communication technologies, a signal transmitting end may encode a signal that needs to be sent to obtain an encoding result, and send the encoding result to a signal receiving end. After receiving the encoding result, the signal receiving end restores the signal based on the encoding result. In addition, in the field of communication technologies, transmission of a signal may be performed between a medium access control (medium access control, MAC) chip and a physical layer (physical layer, PHY) chip through a media independent interface (media independent interface, MII). For example, in a scenario like industrial internet of things, an internet of things terminal includes a PHY chip and a microcontroller unit (microcontroller unit, MCU), the MCU includes a MAC chip, and transmission of a signal is performed between the PHY chip and the MAC chip through the MII. For another example, in a scenario in which a switch is used, the switch includes a PHY chip and a MAC chip, and transmission of a signal is performed between the PHY chip and the MAC chip through the MII.

In the Institute of Electrical and Electronics Engineers (Institute of Electrical and Electronics Engineers, IEEE) 802.3 standard, the MII is a parallel interface, and the MII includes 18 pins, where the 18 pins are used for transmission of a data signal, a control signal, and a management signal. For a specific manner of transmission of a signal by the 18 pins, refer to related content in the IEEE 802.3 standard. Details are not described herein again. However, packaging costs of a chip increase with a quantity of pins of the chip. Therefore, when a quantity of pins that can be provided by a chip is limited, a quantity of pins of the MII on the chip needs to be reduced, so that more pins on the chip can be allocated for other functions.

Embodiments of this application provide an encoding method and a decoding method, to obtain a block pair based on a signal, and implement transmission of the signal in a manner of transmission of the block pair. The method can be applied to a scenario in which transmission of a signal is performed through an MII. In other words, the signal is a signal whose transmission is performed through the MII. The method can be further applied to another scenario other than the MII.

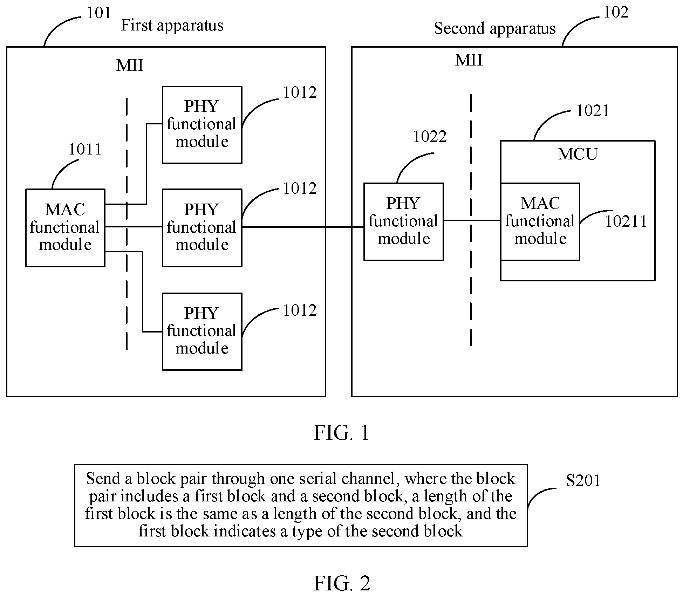

FIG. 1 is a diagram of an implementation environment in which an MII scenario is used as an example according to an embodiment of this application. The method may be applied to the implementation environment shown in FIG. 1. The method can be further applied to another implementation environment. For example, an implementation environment to which the method is applied includes a chip 1 and a chip 2, the chip 1 is connected to the chip 2, and the method may be applied to the chip 1 or the chip 2.

Refer to FIG. 1. The implementation environment includes a first apparatus 101 and a second apparatus 102. The first apparatus 101 includes a MAC functional module 1011 and one or more PHY functional modules 1012 (an example in which the first apparatus 101 includes multiple PHY functional modules 1012 is used in FIG. 1), and transmission of a signal is performed between the MAC functional module 1011 and each PHY functional module 1012 through an MII. The second apparatus 102 includes a MAC functional module 10211 and a PHY functional module 1022, and transmission of a signal is performed between the MAC functional module 10211 and the PHY functional module 1022 through an MII. Signal transmission may be performed between the PHY functional module 1012 and the PHY functional module 1022.

In some embodiments, the second apparatus 102 includes an MCU 1021 and a PHY functional module 1022, and the MCU 1021 includes a MAC functional module 10211. In some embodiments, one or more of the MAC functional module 1011, the PHY functional module 1012, the MAC functional module 10211, and the PHY functional module 1022 may be located in a separate chip, or in a separate die (die), or in one or more cores of a multi-core chip.

The encoding method and the decoding method provided in embodiments of this application may be applied to signal transmission between the MAC functional module 1011 and the PHY functional module 1012, or may be applied to signal transmission between the MAC functional module 10211 and the PHY functional module 1022. A quantity of first apparatuses 101, a quantity of MAC functional modules 1011, a quantity of PHY functional modules 1012, a quantity of second apparatuses 102, a quantity of MCUs 1021, a quantity of MAC functional modules 10211, and a quantity of PHY functional modules 1022 shown in FIG. 1 are merely examples. This is not limited in embodiments of this application. The first apparatus 101 may be a switch or an apparatus used for an internet of things terminal, and the second apparatus 102 may be an internet of things terminal or an apparatus used for an internet of things terminal. For example, the first apparatus 101 and the second apparatus 102 may be single pair ethernet (single pair ethernet, SPE) devices or advanced physical layer (advanced physical layer, APL) devices.

The encoding method provided in embodiments of this application may be shown in FIG. 2. The following describes the method with reference to the implementation environment shown in FIG. 1. The method may be applied to the MAC functional module or the PHY functional module shown in FIG. 1. As shown in FIG. 2, the method includes but is not limited to S201.

S201: Send a block pair through one serial channel, where the block pair includes a first block and a second block, a length of the first block is the same as a length of the second block, and the first block indicates a type of the second block.

In this embodiment of this application, a block pair is a pair of blocks (blocks), and sending the block pair is sending blocks in pairs. For example, the first block is a code block obtained through encoding according to the IEEE 802.3 standard, and the second block is a block whose length is the same as that of the first block. In other words, the second block may include multiple consecutive bits, these bits are considered as one block, and a quantity of bits included in the second block is the same as a quantity of bits included in the first block.

The block pair sent through the serial channel is obtained by encoding a to-be-transmitted signal. In a possible implementation, the to-be-transmitted signal includes at least one of a data signal and/or a first control signal, and the to-be-transmitted signal further includes a management signal. In this embodiment of this application, the data signal may be a signal used for data transmission, the first control signal may be a signal used to control data transmission, and the management signal may be another signal other than the data signal and the first control signal.

In a possible implementation, the to-be-transmitted signal is related to an Ethernet frame. For example, the to-be-transmitted signal includes a data signal and/or a first control signal generated based on an Ethernet frame that needs to be transmitted. For example, when the method is applied to the MAC functional module for execution, the MAC functional module converts the Ethernet frame that needs to be transmitted into a parallel signal to be transmitted through an MII, and obtains the to-be-transmitted signal based on the parallel signal to be transmitted through the MII. The parallel signal to be transmitted through the MII is a signal to be transmitted by using multiple pins of the MII in the IEEE 802.3 standard. For example, the data signal includes some or all of data signals to be transmitted through the MII, and the first control signal includes some or all of control signals to be transmitted through the MII.

Alternatively, both the data signal and the first control signal may be generated based on the Ethernet frame. For example, when the method is applied to the MAC functional module, the MAC functional module obtains the Ethernet frame, and generates the data signal based on the Ethernet frame. For another example, when the method is applied to the MAC functional module, the MAC functional module obtains the Ethernet frame, and generates a first part of the first control signal based on the Ethernet frame. In some embodiments, the first control signal further includes a second part. The second part may be generated by an execution body of the method. That is, if the method is applied to the MAC functional module, the MAC functional module may generate the second part; or if the method is applied to the PHY functional module, the PHY functional module may generate the second part.

In this embodiment of this application, the first part may be a signal obtained based on content of the Ethernet frame. For example, the first part is a control signal to be transmitted through the MII and obtained based on the Ethernet frame. The second part may be an error signal for transmission of error information. For example, an error signal is generated when transmission of the Ethernet frame needs to be interrupted. For another example, after transmission of the Ethernet frame is completed, if occupancy of a channel needs to be maintained, an error signal is generated. A format of the error signal is not limited in this embodiment of this application. In other words, if the to-be-transmitted signal includes the data signal, the data signal is obtained based on the Ethernet frame; or if the to-be-transmitted signal includes the first control signal, the first control signal includes at least one of the first part obtained based on the Ethernet frame or the generated second part.

In a possible implementation, if the Ethernet frame carries data, the to-be-transmitted signal includes a data signal generated based on the carried data; or if the Ethernet frame does not carry data, the to-be-transmitted signal does not include a data signal. For example, the first part of the first control signal is obtained based on another part of the Ethernet frame other than an Ethernet start-of-stream delimiter, or is obtained based on another part of the Ethernet frame other than an Ethernet start-of-stream delimiter and an Ethernet end-of-stream delimiter. For example, the Ethernet frame is further used to obtain a second control signal, and the to-be-transmitted signal may include the second control signal. Alternatively, the Ethernet frame is further used to obtain a second control signal and a third control signal, and the to-be-transmitted signal may include the second control signal and the third control signal. The second control signal may be generated based on the Ethernet start-of-stream delimiter of the Ethernet frame, and the third control signal may be generated based on the Ethernet end-of-stream delimiter of the Ethernet frame.

When the method is applied to an MII scenario, the to-be-transmitted signal may include a signal to be transmitted through an MII. For example, the management signal includes a management data input/output (management data input/output, MDIO) signal. For example, the method is applied to the MAC functional module, and the MAC functional module includes a station management entity (station management entity, STA). In this case, the management signal includes the MDIO signal driven by the STA. For another example, the method is applied to the PHY functional module. In this case, the management signal includes the MDIO signal driven by the PHY functional module. For a manner in which the STA drives the MDIO signal, refer to a manner in which the STA drives the MDIO signal in the IEEE 802.3 standard. For a manner in which the PHY functional module drives the MDIO signal, refer to a manner in which the PHY functional module drives the MDIO signal in the IEEE 802.3 standard. Details are not described herein again.

An example in which the to-be-transmitted signal includes a signal to be transmitted through the MII is still used for description. When the method is applied to the MAC functional module, both the data signal and the first control signal may be collectively represented by a transmit enable (transmit enable, TX_EN) signal, a transmit error (transmit error, TX_ER) signal, and a transmit data (transmit data, TXD) signal whose transmission is performed through the MII in the IEEE 802.3 standard. For example, whether a signal to be transmitted on TXD is a data signal or a control signal is indicated by validity and invalidity of TX_EN and TX_ER. The data signal includes but is not limited to data (data) included in the Ethernet frame, and the control signal includes but is not limited to a preamble (preamble), low power idle (low power idle, LPI), and an end-of-frame delimiter (end-of-frame delimiter, EFD) during transmission of the Ethernet frame. When the method is applied to the PHY functional module, both the data signal and the first control signal may be collectively represented by a receive data valid (receive data valid, RX_DV) signal, a receive error (receive error, RX_ER) signal, and a receive data (receive data, RXD) signal whose transmission is performed through the MII in the IEEE 802.3 standard. In other words, whether a signal to be transmitted on RXD is a data signal or a control signal is indicated by validity and invalidity of RX_DV and RX_ER.

After the to-be-transmitted signal is obtained, the to-be-transmitted signal may be encoded to obtain the block pair, and then the block pair is sent through the serial channel. In some embodiments, that the first block indicates the type of the second block includes but is not limited to at least one of the following cases.

In case 1, the first block is a data block, indicating that the second block is a data block. A value indicating that the second block is the data block of the first block may be set based on experience or an actual requirement.

In case 2, the first block is a control block with a value of X, indicating that the second block is a control block.

In case 3, the first block is a control block with a value of Y, indicating that the second block is a management block.

In case 4, the first block is a control block with a value of Z, indicating that the second block is a data block.

In case 5, the first block is a control block with a value of W, indicating that the second block indicates COL and CRS in a bitmap (bitmap) manner. Indicating the COL and the CRS means indicating positions of the COL and the CRS in the second block, but not indicating values of the COL and the CRS.

The values of the COL and the CRS may be set based on experience or an actual requirement. For example, the value of the COL being 0 indicates validity, and the value of the COL being 1 indicates invalidity; or the value of the COL being 0 indicates invalidity, and the value of the COL being 1 indicates validity. For another example, the value of the CRS being 0 indicates validity, and the value of the CRS being 1 indicates invalidity; or the value of the CRS being 0 indicates invalidity, and the value of the CRS being 1 indicates validity.

In the foregoing cases 2 to 5, values of X, Y, Z, and W may be set based on experience or an actual requirement, and the values of X, Y, Z, and W are different. X may be represented as a first value, Y may be represented as a second value, Z may be represented as a third value, and W may be represented as a fourth value. In addition, the foregoing cases may be applied to multiple block pairs. That is, in the method provided in this embodiment of this application, multiple block pairs may be sent through one serial channel, each block pair includes a first block and a second block, and a manner in which the first block indicates a type of the second block in different block pairs may be any one of the foregoing cases 1 to 5.

For example, the data block includes a data signal, the control block includes a control signal, and the management block includes a management signal. The data block and the control block may further include another signal. For example, the data block may further include a management signal, and the control block may further include a data signal and a management signal. In other words, in some embodiments, regardless of the type of the second block, the second block includes the management signal. For example, the first control signal, the second control signal, and the third control signal are collectively referred to as control signals, and a type of the control block corresponds to a type of the control signal.

In some embodiments, the management signal occupies 1 bit. A position of 1 bit occupied by the management signal may be set based on experience or an actual requirement. In some other embodiments, the management signal occupies 1 bit or 2 bits. A position of 1 bit or positions of 2 bits occupied by the management signal may be set based on experience or an actual requirement. When the management signal occupies 2 bits, positions of the 2 bits may be adjacent or not adjacent, and a quantity and positions of bits occupied by the management signal are flexible.

In a possible implementation, both the length of the first block and the length of the second block are 5 bits. Therefore, the first block and the second block each may be obtained based on a bit of TXD of one cycle. The cycle to which the bit used to obtain the first block belongs and the cycle to which the bit used to obtain the second block belongs may be two consecutive cycles. In some embodiments, both the length of the first block and the length of the second block are 5 bits, the first block is a data block, and the second block includes a 4-bit data signal and a 1-bit management signal; or the first block is a control block, and the second block includes a 4-bit data signal and a 1-bit management signal; or the first block is a control block, and the second block includes a 4-bit control signal and a 1-bit management signal. In some embodiments, the first block may be obtained through encoding using a 4B/5B scheme, where 4B/5B means 4 bits/5 bits. For content of 4B/5B encoding, refer to content of 4B/5B encoding in the IEEE 802.3 standard. Details are not described herein again.

In another possible implementation, both the length of the first block and the length of the second block are 10 bits. Therefore, the first block and the second block each may be obtained based on a bit of TXD of two cycles. The two cycles to which the bit used to obtain the first block belongs and the two cycles to which the bit used to obtain the second block belongs are consecutive. In some embodiments, if both the length of the first block and the length of the second block are 10 bits, a behavior of the first block and the second block is similar to that when both the length of the first block and the length of the second block are 5 bits. For example, the first block is a data block, and the second block includes an a-bit data signal and a b-bit management signal; or the first block is a control block, and the second block includes an a-bit data signal and a b-bit management signal; or the first block is a control block, and the second block includes an a-bit control signal and a b-bit management signal, where b is equal to 1 or 2, and a is equal to 10 - b. For example, the first block may be obtained through encoding using an 8B/10B scheme, where 8B/10B means 8 bits/10 bits. For content of 8B/10B encoding, refer to content of 8B/10B encoding in the IEEE 802.3 standard. Details are not described herein again.

In some embodiments, the second block may be obtained through encoding, or may directly include a corresponding signal without encoding. When the second block is obtained through encoding, an encoding scheme of the second block may be the same as or different from an encoding scheme of the first block.

For example, in a block pair, the first block is a J code block, and the second block is a K code block; or the first block is a T code block, and the second block is an R code block. The J code block, the K code block, the T code block, and the R code block may be respectively a J code block, a K code block, a T code block, and an R code block defined in the IEEE 802.3. For example, the J code block is 11000, the K code block is 10001, the T code block is 01101, and the R code block is 00111. In a possible implementation, a block pair including a J code block and a K code block indicates a start-of-stream delimiter (start-of-stream delimiter, SSD), and a block pair including a T code block and an R code block indicates an end-of-stream delimiter (end-of-stream delimiter, ESD).

In a possible implementation, if the second block includes multiple bits of a same signal, the multiple bits may be transformed bits or untransformed bits. A transformation manner is not limited in this embodiment of this application. For example, the transformation manner includes sequential transformation.

The following describes the obtained block pair by using an example in which the first block is obtained through encoding using the 4B/5B scheme.

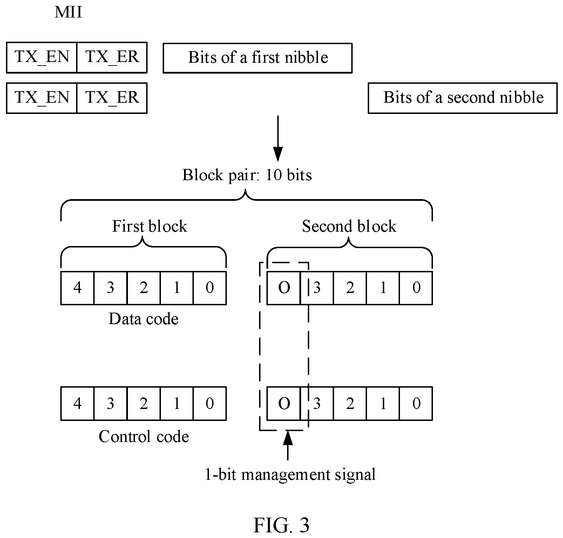

A 4B/5B encoding scheme specified in the IEEE 802.3 standard is encoding a bit based on a nibble width, and an encoded symbol obtained through encoding is used for representing a data code and a control code. Coding efficiency of 4B/5B encoding is 4/5 × 100% = 80%. FIG. 3 is a diagram of a block pair according to an embodiment of this application. Refer to FIG. 3. The block pair includes a first block and a second block, the first block is obtained through encoding using a 4B/5B scheme, the second block includes a 1-bit management signal and another 4-bit signal, and a type of the another signal included in the second block is indicated by the first block. As shown in FIG. 3, the first block may be a data code or a control code.

In some embodiments, a state of a bit used to obtain the first block may be indicated by TX_EN and TX_ER whose transmission is performed through the MII. For example, TX_EN and TX_ER in FIG. 3 can indicate that bits of a first nibble are bits of a data signal or bits of a control signal, and can further indicate that bits of a second nibble are bits of a data signal or bits of a control signal. The bits of the first nibble are used to obtain the first block, and the bits of the second nibble are used to obtain the second block.

A management signal is used to obtain the second block. As shown in FIG. 3, the second block includes the 1-bit management signal, and the bit is represented by "O". As shown in FIG. 3, the 1-bit management signal may be located at a most significant bit of the second block. The 1-bit management signal may alternatively be located at another position of the second block. This is not limited in this embodiment of this application. The second block further includes 4 bits of the second nibble, and the 4 bits may be a 4-bit data signal or a 4-bit control signal. With reference to the block pair shown in FIG. 3, if the block pair is obtained based on an 8-bit data signal, or based on an 8-bit control signal, or based on a 4-bit data signal and a 4-bit control signal, coding efficiency of the block pair is 8/10 × 100% = 80%.

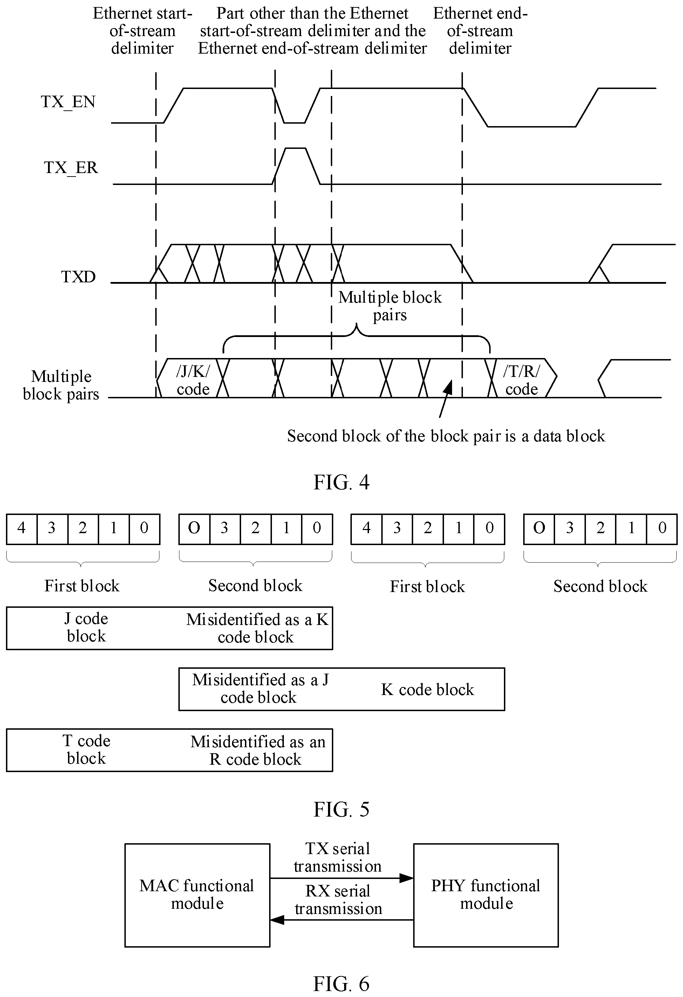

In this embodiment of this application, consecutive J and K code blocks are used for stream synchronization and for representing an SSD. When the consecutive J and K codes are identified, it is determined that transmission of an Ethernet frame starts. Consecutive T and R code blocks are used for representing an ESD. Therefore, when the consecutive T and R code blocks are identified, it is determined that transmission of the Ethernet frame ends. FIG. 4 is a diagram of transmission of an Ethernet frame according to an embodiment of this application. As shown in FIG. 4, the Ethernet frame is represented by TX_EN, TX_ER, and TXD whose transmission is performed through the MII, and the Ethernet frame includes an Ethernet start-of-stream delimiter, an Ethernet end-of-stream delimiter, and a part of the Ethernet frame other than the Ethernet start-of-stream delimiter and the Ethernet end-of-stream delimiter. A signal representing the Ethernet start-of-stream delimiter of the Ethernet frame is encoded to obtain a block pair, where a first block of the block pair is a J code block, and a second block is a K code block. In FIG. 4, the block pair is represented as a /J/K/ code. A signal representing the Ethernet end-of-stream delimiter of the Ethernet frame is encoded to obtain a block pair, where a first block of the block pair is a T code block, and a second block is an R code block. In FIG. 4, the block pair is represented as a /T/R/ code. A signal representing the part of the Ethernet frame other than the Ethernet start-of-stream delimiter and the Ethernet end-of-stream delimiter is encoded to obtain multiple block pairs. For example, if a quantity of bits included in the Ethernet frame is not an integer multiple of a byte, a first block of a last block pair of the multiple block pairs is a control block, and as shown in FIG. 4, a second block of the block pair is a data block.

In a possible implementation, an SSD is represented by using consecutive J and K code blocks, so that identifying a block pair that does not include the J code block and the K code block as a block pair including the J code block and the K code block can be avoided. FIG. 5 is a diagram of misidentification according to an embodiment of this application. As shown in FIG. 5, a first block is identified as a J code block, and a second block of a block pair is misidentified as a K code block; or the first block is identified as a K code block, and a second block of a previous block pair of the block pair is misidentified as a J code block. An ESD is represented by using consecutive T and R code blocks, so that identifying a block pair that does not include the T code block and the R code block as a block pair including the T code block and the R code block can be avoided. For example, as shown in FIG. 5, the first block is identified as a T code block, and the second block of the block pair is misidentified as an R code block. Consecutive J and K code blocks may be represented as a /J/K/ code, and consecutive T and R code blocks may be represented as a /T/R/ code. The three cases shown in FIG. 5 all cause misidentification of a block pair. That is, a bit of a management signal is mistaken for a bit of the J code block, the K code block, or the R code block. Therefore, in this embodiment of this application, the J code block and the K code block need to be consecutively used, and the T code block and the R code block need to be consecutively used, to avoid misidentification of the block pair.

For example, when a first block is obtained through encoding using the 4B/5B scheme, content included in a block pair may be shown in the following Table 1. One O represents a 1-bit management signal, a value of a position represented by O may be 1, and a value of a position represented by x may be 0 or 1.

**Table 1**

| Block pair name | First block | Second block | Note |
|---|---|---|---|
| 0 | 11110 | Oxxxx | Both the first block and the second block are data blocks, and the first block represents a value 0 |
| 1 | 01001 | Oxxxx | Both the first block and the second block are data blocks, and the first block represents a value 1 |
| 2 | 10100 | Oxxxx | Both the first block and the second block are data blocks, and the first block represents a value 2 |
| 3 | 10101 | Oxxxx | Both the first block and the second block are data blocks, and the first block represents a value 3 |
| 4 | 01010 | Oxxxx | Both the first block and the second block are data blocks, and the first block represents a value 4 |
| 5 | 01011 | Oxxxx | Both the first block and the second block are data blocks, and the first block represents a value 5 |
| 6 | 01110 | Oxxxx | Both the first block and the second block are data blocks, and the first block represents a value 6 |
| 7 | 01111 | Oxxxx | Both the first block and the second block are data blocks, and the first block represents a value 7 |
| 8 | 10010 | Oxxxx | Both the first block and the second block are data blocks, and the first block represents a value 8 |
| 9 | 10011 | Oxxxx | Both the first block and the second block are data blocks, and the first block represents a value 9 |
| A | 10110 | Oxxxx | Both the first block and the second block are data blocks, and the first block represents a value A |
| B | 10111 | Oxxxx | Both the first block and the second block are data blocks, and the first block represents a value B |
| C | 11010 | Oxxxx | Both the first block and the second block are data blocks, and the first block represents a value C |
| D | 11011 | Oxxxx | Both the first block and the second block are data blocks, and the first block represents a value D |
| E | 11100 | Oxxxx | Both the first block and the second block are data blocks, and the first block represents a value E |
| F | 11101 | Oxxxx | Both the first block and the second block are data blocks, and the first block represents a value F |
| I code block | 11111 | O1111 | Both the first block and the second block are control blocks, and the first block represents idle (idle) |
| P code block | 00000 | O11111 | Both the first block and the second block are control blocks, and the first block represents sleep (sleep) |
| R code block | 00111 | Ox1xx | Both the first block and the second block are control blocks, and the first block represents reset (reset) |
| H code block | 00100 | Ox1xx | Both the first block and the second block are control blocks, and the first block represents error (error) |
| S code block | 11001 | Oxxxx | Both the first block and the second block are control blocks, and the first block represents set (set) |
| N code block | 00101 | Oxxxx | Both the first block and the second block are control blocks, and the first block represents nibble data (nibble data) |
| O code block | 00011 | OO1OO | The first block is a control block, the second block is a management block, and the first block represents PHY operation, administration, and maintenance (operation, administration, and maintenance, OAM) |

For example, with reference to Table 1, the R code block may be used separately. In other words, a first block of a block pair may be the R code block, and a second block of the block pair may be Oxxxx. In this embodiment of this application, a block of 5 bits whose value is 00111 is referred to as the R code block. If the block whose value is 00111 is a first block of a block pair, the block pair may also be referred to as an R code block. In some embodiments, if the second block of the R code block is any Oxxxx pattern except Ox1xx, the block pair represents reset extend (reset extend). If the second block of the H code block is O ERR 1 CRS COL, and the second block indicates COL and CRS, the block pair represents a physical layer channel state indication, where ERR represents an error indication (error), and the block pair may also be referred to as an H.sig code block. If the second block of the S code block is O1110, the block pair represents a PHY-level collision avoidance (PHY-level collision avoidance, PLCA) BEACON (a signal type). If the second block of the S code block is 01101, the block pair represents PLCA COMMIT (a signal type). If the second block of the S code block is any Oxxxx pattern except O1110 and 01101, the block pair represents set extend (set extend). If a block pair is another case other than the cases shown in Table 1, a first block and a second block of the block pair are both control blocks, and the block pair represents reserved (reserved). For example, the block pair representing reserved is used to extend a new Ethernet function. This is not limited in this embodiment of this application.

After the block pair is obtained, the block pair is sent through one serial channel. In a possible implementation, the serial channel is used to connect a MAC layer to a PHY, and the serial channel may be referred to as a serial channel implemented based on an MII. For example, the serial channel is implemented by using one pin (pin) or by using a group of pins. Therefore, if the serial channel is implemented by using one pin, the pin is used to send the block pair. If the serial channel is implemented by using multiple pins, differential signals whose transmission is to be performed by using the multiple pins may be first obtained based on the block pair, and then transmission of the differential signals is performed by using the multiple pins, so that the block pair is sent through one serial channel. Therefore, the block pair is sent through one serial channel, so that only a small quantity of pins need to be disposed to implement the serial channel.

FIG. 6 is a diagram of a transmission process of a block pair according to an embodiment of this application. The method may be applied to the MAC functional module or the PHY functional module. If the method is applied to the MAC functional module, in the method, the block pair may be transmitted to the PHY functional module through a serial channel. The transmission process may correspond to TX serial transmission shown in FIG. 6. If the method is applied to the PHY functional module, in the method, the block pair may be transmitted to the MAC functional module through a serial channel. The transmission process may correspond to RX serial transmission shown in FIG. 6.

In this embodiment of this application, when the block pair is transmitted through a serial channel, the obtained block pair may be directly transmitted, or processing is first performed on the block pair, and then a block pair obtained after processing is transmitted. The processing performed on the block pair includes at least one of encoding or scrambling, where the encoding includes non-return-to-zero-invert (non-return-to-zero-invert, NRZI) encoding or non-return-to-zero (non-return-to-zero, NRZ) encoding.

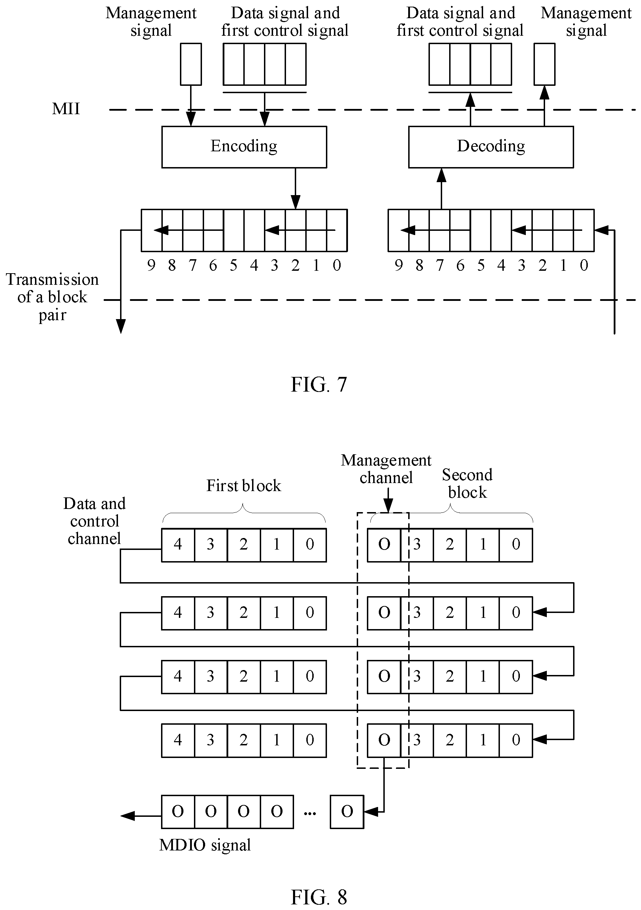

FIG. 7 is a diagram of another transmission process of a block pair according to an embodiment of this application. As shown in FIG. 7, to-be-transmitted signals include a management signal, a data signal, and a first control signal to be transmitted in parallel through an MII. The to-be-transmitted signal is encoded to obtain the block pair. Both a length of a first block and a length of a second block of the block pair are 5 bits. After the block pair is obtained, bits of the block pair are serially transmitted through the MII. In addition, as shown in FIG. 7, when the block pair is transmitted, the bits of the block pair may be transmitted in descending order of bit positions. In some embodiments, the bits of the block pair may alternatively be transmitted in ascending order of bit positions.

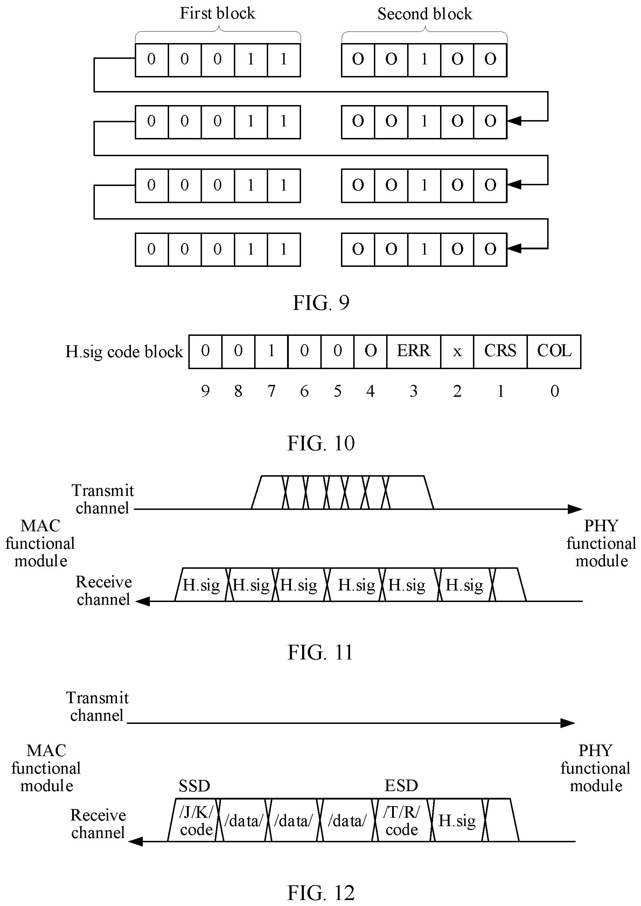

FIG. 8 is a diagram of still another transmission process of a block pair according to an embodiment of this application. As shown in FIG. 8, bit positions corresponding to the block pair are used as a management channel and a data and control channel. The bit positions used as the management channel carry a management signal, and the bit positions used as the data and control channel carry a data signal or a first control signal. As shown in FIG. 8, a 1-bit management signal included in each block pair is used to form an MDIO signal. FIG. 9 is a diagram of still another transmission process a block pair according to an embodiment of this application. As shown in FIG. 9, when no transmission of a data signal is needed, that is, a data channel is idle, a first block of the block pair is a control block, a second block of the block pair is a management block, and the management block includes a multi-bit management signal. Refer to FIG. 9. Each second block includes a 4-bit management signal, and the 4 bits are represented by "O". In this case, transmission efficiency of the management signal is high in comparison with a case in which the second block includes only a 1-bit management signal.

FIG. 10 is a diagram of another block pair according to an embodiment of this application. For example, as shown in FIG. 10, a first block of the block pair is a control block, a second block of the block pair indicates COL and CRS, and the block pair may be referred to as an H.sig code block. x shown in FIG. 10 may be 0 or 1. FIG. 11 is a diagram of a transmission process of an H.sig code block according to an embodiment of this application. As shown in FIG. 11, when the method is applied to the PHY functional module and a block pair is transmitted to the MAC functional module, if the MAC functional module is in a sending mode, that is, the MAC functional module sends a block pair to the PHY functional module, the PHY functional module may transmit the H.sig code block to the MAC functional module through a receive channel of the MAC functional module. A transmit channel of the MAC functional module may be a channel that is established based on the MII and used by the MAC functional module to transmit a block pair to the PHY functional module. The receive channel of the MAC functional module may be a channel that is established based on the MII and used by the MAC functional module to receive a block pair transmitted by the PHY functional module.

If the method is applied to the PHY functional module and a block pair is transmitted to the MAC functional module, if the MAC functional module is in a receiving mode, that is, the MAC functional module receives a block pair sent by the PHY functional module, the PHY functional module may transmit the H.sig code block to the MAC functional module through the receive channel of the MAC functional module.

FIG. 12 is a diagram of another transmission process of an H.sig code block according to an embodiment of this application. As shown in FIG. 12, the MAC functional module receives data through a receive channel, where the data is obtained based on an Ethernet frame. For example, the data obtained based on the Ethernet frame includes /data/ shown in FIG. 12. As shown in FIG. 12, the PHY functional module further transmits a block pair used for representing an SSD to the MAC functional module, where the block pair includes a /J/K/ code. The PHY functional module further transmits a block pair used for representing an ESD to the MAC functional module, where the block pair includes a /T/R/ code. When the data is normal, the MAC functional module can obtain COL and/or CRS based on the received Ethernet frame. The MAC functional module may further receive, through the receive channel, an H.sig code block sent by the PHY functional module. CRS indicated by a second block of the H.sig code block may be valid, so that the second block of the H.sig code block may indicate virtual CRS occupation.

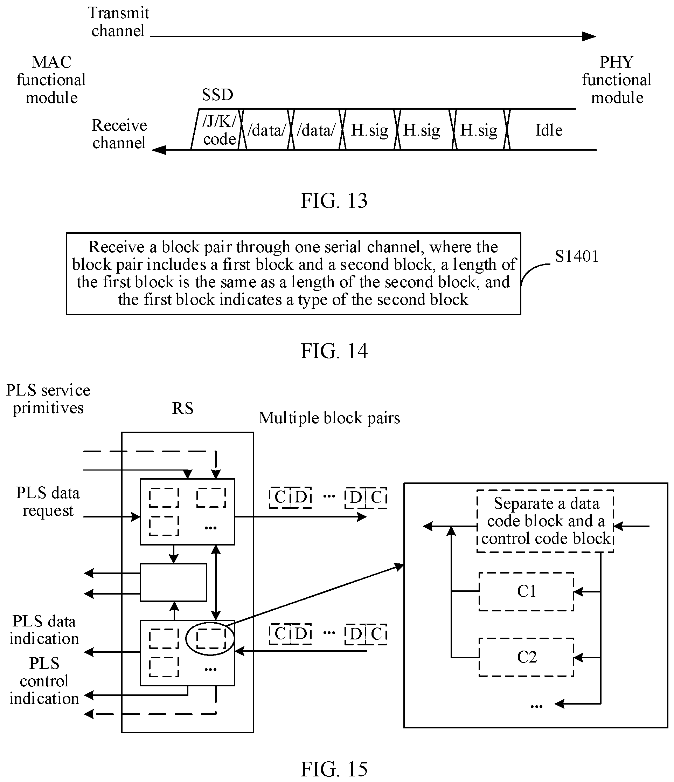

When the method is applied to the PHY functional module and a block pair is transmitted to the MAC functional module, if the MAC functional module is in a receiving mode, and data sent by the PHY functional module to the MAC functional module is abnormal, the H.sig code block can be used to replace the abnormal data for transmission. FIG. 13 is a diagram of still another transmission process of an H.sig code block according to an embodiment of this application. As shown in FIG. 13, the MAC functional module receives data through a receive channel, where the data is obtained based on an Ethernet frame. For example, the data obtained based on the Ethernet frame includes /data/ shown in FIG. 13. As shown in FIG. 13, the PHY functional module further transmits a block pair used for representing an SSD to the MAC functional module, where the block pair includes a /J/K/ code. The MAC functional module further receives an H.sig code block through the receive channel. A validity state of COL and CRS indicated by a second block of the H.sig code block may be set based on a requirement, and the H.sig code block is obtained as a replacement for abnormal data. As shown in FIG. 13, the PHY functional module may further transmit a block pair for representing idle to the MAC functional module. For example, in FIG. 11 to FIG. 13, the process of transmitting the H.sig code block by the PHY functional module is implemented in a half-duplex scenario.

The foregoing uses an example in which the first block is obtained through encoding using the 4B/5B scheme for description. If the first block is obtained through encoding using the 8B/10B scheme, a principle of a manner of setting values of the first block and the second block may be the same as a principle of a manner of setting values of the first block and the second block in the 4B/5B scheme. Details are not described in embodiments of this application again.

The foregoing describes the encoding method provided in embodiments of this application. An embodiment of this application further provides a decoding method. The method may be shown in FIG. 14. The method may be applied to the MAC functional module or the PHY functional module shown in FIG. 1, and the MAC functional module and the PHY functional module may be located in a same chip or different chips. As shown in FIG. 14, the method includes but is not limited to S1401.

S1401: Receive a block pair through one serial channel, where the block pair includes a first block and a second block, a length of the first block is the same as a length of the second block, and the first block indicates a type of the second block.

In this embodiment of this application, the serial channel for receiving the block pair is the same as the serial channel for sending the block pair in the encoding method. For content of the serial channel, refer to related descriptions in the encoding method. Details are not described herein again. For content of the block pair, refer to related descriptions in the encoding method. Details are not described herein again. For example, the block pair is decoded according to an encoding scheme of obtaining the block pair, to obtain a signal included in the block pair. The diagram of the transmission process of the block pair shown in FIG. 7 is used as an example. Bits of the block pair are serially transmitted through an MII. After the bits of the block pair are serially received through the MII, the block pair is decoded to obtain to-be-transmitted signals, namely a management signal, a data signal, and a first control signal. Both the length of the first block and the length of the second block of the block pair are 5 bits.

In some embodiments, if the method is applied to the PHY functional module, a serially received block pair is input into a reconciliation sublayer (reconciliation sublayer, RS), and an operation of decoding the block pair is performed at the RS. In the method, the operation of decoding the block pair is performed at the RS, so that a signal included in the block pair can be directly converted, at the RS, into a signal processable at a physical layer signaling (physical layer signaling, PLS) sublayer, without a need to first convert the signal included in the block pair into a parallel signal whose transmission is performed through the MII in the IEEE 802.3 standard, and then convert the parallel signal into the signal processable at the PLS. Therefore, efficiency of obtaining the signal processable at the PLS is high.

FIG. 15 is a diagram of a process of inputting a block pair into an RS according to an embodiment of this application. As shown in FIG. 15, a block pair received through a serial channel enters an RS, and an operation of decoding the block pair is performed at the RS. A to-be-transmitted signal is further converted, at the RS, into a signal processable at a PLS. For example, the signal processable at the PLS includes PLS service primitives (PLS service primitives) shown in FIG. 15. For example, a block pair whose first block is a data block is referred to as a data code block, and a block pair whose first block is a control block is referred to as a control code block. A code block represented by C shown in FIG. 15 may be a control code block, and a code block represented by D shown in FIG. 15 may be a data code block.

As shown in FIG. 15, the control code block and the data code block may be separated at the RS, and operations are performed on the separated data code block and control code block. The performed operations are shown by C1 and C2 in FIG. 15. A type of the operation is not limited in this embodiment of this application. The PLS service primitives include but are not limited to a PLS control request (PLS control request), a PLS data request (PLS data request), a PLS signal indication (PLS signal indication), a PLS carrier indication (PLS carrier indication), a PLS data indication (PLS data indication), and a PLS control indication (PLS control indication) shown in FIG. 15.

In a possible implementation, after multiple block pairs are received, boundaries of the multiple block pairs need to be identified to implement synchronization of the multiple block pairs. The synchronization of the multiple block pairs includes but is not limited to synchronization of a management channel and synchronization of a data channel. The synchronization of the management channel can ensure exchange of management signals, and the synchronization of the data channel can ensure exchange of data signals and control signals.

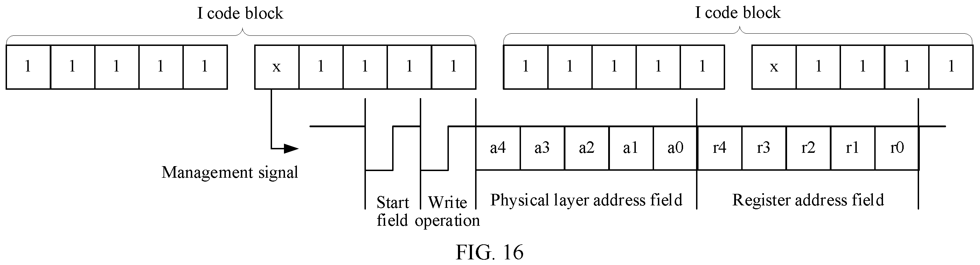

FIG. 16 is a diagram of a process of synchronization of a management channel according to an embodiment of this application. Refer to FIG. 16. A block pair is an I code block, the I code block may be uniquely identified, and x may be 0 or 1. When a management signal does not include an MDIO signal, a value of a bit of the management signal is 1. When the management signal includes an MDIO signal and transmission of the MDIO signal starts, a "101" transition occurs in multiple bits of the management signal, where the transition can indicate a start (start) field. Therefore, the synchronization of the management channel can be implemented by identifying the start field. For other content of the management signal shown in FIG. 16, refer to related descriptions of a management frame corresponding to the management signal in the IEEE 802.3 standard. Details are not described herein again. In addition, a0 to a4 shown in FIG. 16 are merely used as an example of a value of a physical layer address field of the management frame, and r0 to r4 are merely used as an example of a value of a register address field of the management frame. a0 to a4 and r0 to r4 are not used to limit values of the two fields.

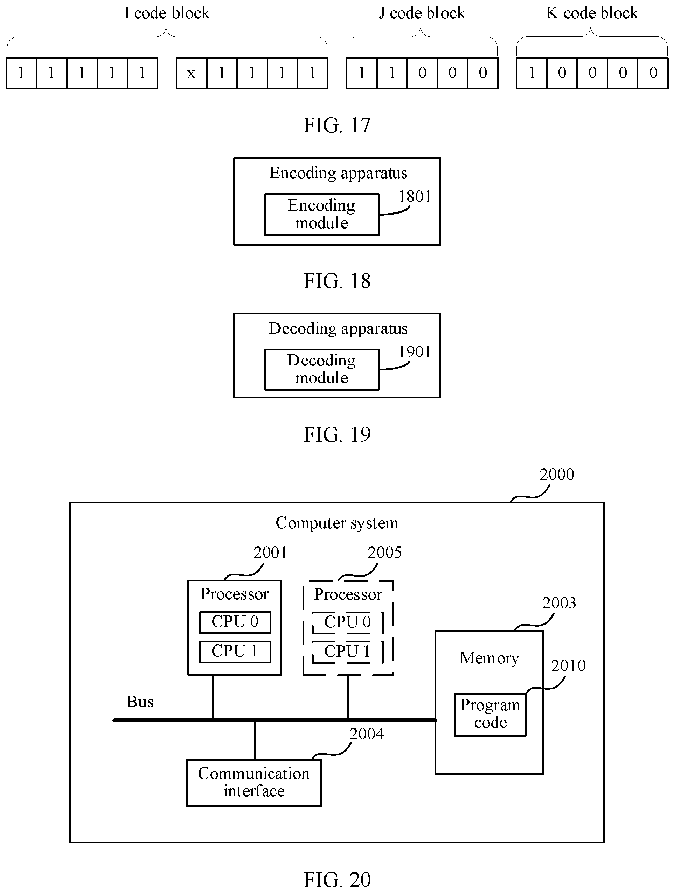

In a possible implementation, synchronization of a data channel is implemented by identifying an SSD of an Ethernet frame. In other words, it may be determined, by identifying consecutive J and K code blocks, that transmission of the Ethernet frame starts, thereby implementing the synchronization of the data channel. FIG. 17 is a diagram of a process of synchronization of a data channel according to an embodiment of this application. x in FIG. 17 may be 1 or 0. As shown in FIG. 17, it is first identified that a former block pair is an I code block, and then it is identified that a first block of a latter block pair is a J code block and a second block is a K code block. Therefore, after the latter block pair is identified, it can be determined that transmission of an Ethernet frame starts, thereby implementing the synchronization of the data channel. In a possible implementation, when the synchronization of the data channel is implemented, a bit position corresponding to a management channel is fixed in a block pair. Therefore, in this case, the bit position corresponding to the management channel may be directly determined. In this way, synchronization of the management channel can be implemented by identifying a start field of a management signal.

In the method provided in embodiments of this application, transmission of a block pair is performed through one serial channel, where the block pair includes a first block and a second block, a length of the first block is the same as a length of the second block, and the first block indicates a type of the second block. The type of the second block is indicated by the first block, and the second block does not need to include content indicating the type of the second block. Therefore, the second block can carry other content other than the content indicating the type of the second block, and the second block has high scalability. In the method provided in embodiments of this application, the length of the first block is the same as the length of the second block. Therefore, the first block and the second block may include a same quantity of bits of a same signal, or the first block and the second block include bits of different signals, but a quantity of bits of the signal included in the first block is the same as a quantity of bits of the signal included in the second block. Transmission of the block pair is performed through one serial channel, so that a quantity of pins of the serial channel may be small. In addition, the serial channel in the method may be implemented based on an MII. Therefore, the method may be applied to an MII scenario.

An embodiment of this application further provides a data structure. The data structure includes the block pair in any one of the foregoing method embodiments.

An embodiment of this application further provides an encoding apparatus. FIG. 18 is a diagram of a structure of an encoding apparatus according to an embodiment of this application. The apparatus is used for a MAC functional module or a PHY functional module. Based on multiple modules shown in FIG. 18, the apparatus can perform all or some operations in the encoding method shown in FIG. 2. It should be understood that the apparatus may include more additional modules than the shown modules or omit some of the shown modules. This is not limited in this embodiment of this application. As shown in FIG. 18, the apparatus includes an encoding module 1801.

The encoding module 1801 is configured to send a block pair through one serial channel, where the block pair includes a first block and a second block, a length of the first block is the same as a length of the second block, and the first block indicates a type of the second block.

In some embodiments, that the first block indicates the type of the second block includes: If the first block is a data block, it indicates that the second block is a data block.

In some embodiments, that the first block indicates the type of the second block includes: If the first block is a control block with a value of X, it indicates that the second block is a control block.

In some embodiments, that the first block indicates the type of the second block includes: If the first block is a control block with a value of Y, it indicates that the second block is a management block.

In some embodiments, that the first block indicates the type of the second block includes: If the first block is a control block with a value of Z, it indicates that the second block is a data block.

In some embodiments, that the first block indicates the type of the second block includes: If the first block is a control block with a value of W, it indicates that the second block indicates COL and CRS in a bitmap manner. X may be represented as a first value, Y may be represented as a second value, Z may be represented as a third value, and W may be represented as a fourth value.

In some embodiments, the first block is a J code block, and the second block is a K code block; or the first block is a T code block, and the second block is an R code block.

In some embodiments, a block pair including the J code block and the K code block indicates an SSD, and a block pair including the T code block and the R code block indicates an ESD.

In some embodiments, the second block includes a management signal.

In some embodiments, the management signal occupies 1 bit.

In some embodiments, both the length of the first block and the length of the second block are 5 bits.

In some embodiments, the first block is obtained through encoding using an 4B/5B scheme.

In some embodiments, the first block is obtained through encoding using an 8B/10B scheme.

In some embodiments, the second block includes a management signal, and the management signal occupies 1 bit or 2 bits.

In some embodiments, the first block is a data block, and the second block includes a 4-bit data signal and a 1-bit management signal; or the first block is a control block, and the second block includes a 4-bit data signal and a 1-bit management signal; or the first block is a control block, and the second block includes a 4-bit control signal and a 1-bit management signal.

In some embodiments, the serial channel is implemented based on an MII.

In some embodiments, the encoding module 1801 is configured to send the block pair from a MAC layer to a PHY through one serial channel.

In some embodiments, the encoding module 1801 is configured to send the block pair from a PHY to a MAC layer through one serial channel.

In the apparatus provided in this embodiment of this application, a block pair is sent through one serial channel, where the block pair includes a first block and a second block, a length of the first block is the same as a length of the second block, and the first block indicates a type of the second block. The type of the second block is indicated by the first block, and the second block does not need to include content indicating the type of the second block. Therefore, the second block can carry other content other than the content indicating the type of the second block, and the second block has high scalability. In the apparatus, the length of the first block is the same as the length of the second block. Therefore, the first block and the second block may include a same quantity of bits of a same signal, or the first block and the second block include bits of different signals, but a quantity of bits of the signal included in the first block is the same as a quantity of bits of the signal included in the second block. Transmission of the block pair is performed through one serial channel, so that a quantity of pins of the serial channel may be small. In addition, the serial channel in the apparatus may be implemented based on the MII. Therefore, the apparatus may be applied to an MII scenario.

An embodiment of this application further provides a decoding apparatus. FIG. 19 is a diagram of a structure of a decoding apparatus according to an embodiment of this application. The apparatus is used for a MAC functional module or a PHY functional module. Based on multiple modules shown in FIG. 19, the apparatus can perform all or some operations in the decoding method shown in FIG. 14. It should be understood that the apparatus may include more additional modules than the shown modules or omit some of the shown modules. This is not limited in this embodiment of this application. As shown in FIG. 19, the apparatus includes a decoding module 1901.

The decoding module 1901 is configured to receive a block pair through one serial channel, where the block pair includes a first block and a second block, a length of the first block is the same as a length of the second block, and the first block indicates a type of the second block.

In some embodiments, that the first block indicates the type of the second block includes: If the first block is a data block, it indicates that the second block is a data block.

In some embodiments, that the first block indicates the type of the second block includes: If the first block is a control block with a value of X, it indicates that the second block is a control block.

In some embodiments, that the first block indicates the type of the second block includes: If the first block is a control block with a value of Y, it indicates that the second block is a management block.

In some embodiments, that the first block indicates the type of the second block includes: If the first block is a control block with a value of Z, it indicates that the second block is a data block.

In some embodiments, that the first block indicates the type of the second block includes: If the first block is a control block with a value of W, it indicates that the second block indicates COL and CRS in a bitmap manner. X may be represented as a first value, Y may be represented as a second value, Z may be represented as a third value, and W may be represented as a fourth value.

In some embodiments, the first block is a J code block, and the second block is a K code block; or the first block is a T code block, and the second block is an R code block.

In some embodiments, a block pair including the J code block and the K code block indicates an SSD, and a block pair including the T code block and the R code block indicates an ESD.

In some embodiments, the second block includes a management signal.

In some embodiments, the management signal occupies 1 bit.

In some embodiments, both the length of the first block and the length of the second block are 5 bits.

In some embodiments, the first block is obtained through encoding using an 4B/5B scheme.

In some embodiments, the first block is obtained through encoding using an 8B/10B scheme.

In some embodiments, the second block includes a management signal, and the management signal occupies 1 bit or 2 bits.

In some embodiments, the first block is a data block, and the second block includes a 4-bit data signal and a 1-bit management signal; or the first block is a control block, and the second block includes a 4-bit data signal and a 1-bit management signal; or the first block is a control block, and the second block includes a 4-bit control signal and a 1-bit management signal.

In some embodiments, the serial channel is implemented based on an MII.

In some embodiments, the decoding module 1901 is configured to receive, from a MAC layer, the block pair sent by a PHY through one serial channel.

In some embodiments, the decoding module 1901 is configured to receive, from a PHY, the block pair sent by a MAC layer through one serial channel.

In the apparatus provided in this embodiment of this application, a block pair is received through one serial channel, where the block pair includes a first block and a second block, a length of the first block is the same as a length of the second block, and the first block indicates a type of the second block. The type of the second block is indicated by the first block, and the second block does not need to include content indicating the type of the second block. Therefore, the second block can carry other content other than the content indicating the type of the second block, and the second block has high scalability. In the apparatus, the length of the first block is the same as the length of the second block. Therefore, the first block and the second block may include a same quantity of bits of a same signal, or the first block and the second block include bits of different signals, but a quantity of bits of the signal included in the first block is the same as a quantity of bits of the signal included in the second block. Transmission of the block pair is performed through one serial channel, so that a quantity of pins of the serial channel may be small. In addition, the serial channel in the apparatus may be implemented based on the MII. Therefore, the apparatus may be applied to an MII scenario.

It should be understood that, when the apparatus provided in FIG. 18 and FIG. 19 implements functions of the apparatus, division into the foregoing functional modules is merely used as an example for description. During actual application, the foregoing functions may be allocated to different functional modules for implementation based on a requirement. In other words, a device is divided into different functional modules in terms of an inner structure, to implement all or some of the functions described above. In addition, the apparatuses provided in the foregoing embodiments and the method embodiments pertain to a same concept. For a specific implementation process of the apparatuses, refer to the method embodiments. Details are not described herein again.

FIG. 20 is a diagram of a structure of a computer system according to an embodiment of this application. For example, as shown in FIG. 20, the computer system is a computer system 2000. The computer system 2000 may be a network device, a routing device, or a switching device. The computer system 2000 shown in FIG. 20 is configured to perform the encoding method shown in FIG. 2 or the decoding method shown in FIG. 14. The computer system 2000 is, for example, a server, and the computer system 2000 may be implemented by using a general bus architecture.

As shown in FIG. 20, the computer system 2000 includes at least one processor 2001, a memory 2003, and at least one communication interface 2004.

The processor 2001 is a central processing unit (central processing unit, CPU), a digital signal processor (digital signal processor, DSP), a network processor (network processor, NP), a graphics processing unit (graphics processing unit, GPU), a neural-network processing unit (neural-network processing unit, NPU), a data processing unit (data processing unit, DPU), a microprocessor, or one or more integrated circuits configured to implement the method provided in embodiments of this application. For example, the processor 2001 includes an application-specific integrated circuit (application-specific integrated circuit, ASIC), a programmable logic device (programmable logic device, PLD) or another programmable logic device, a transistor logic device, a hardware component, or any combination thereof. The PLD is, for example, a complex programmable logic device (complex programmable logic device, CPLD), a field-programmable gate array (field-programmable gate array, FPGA), generic array logic (generic array logic, GAL), or any combination thereof. The processor 2001 may implement or execute various logical blocks, modules, and circuits described with reference to content disclosed in embodiments of this application, or may be a combination implementing a computing function, for example, a combination of one or more microprocessors or a combination of a DSP and a microprocessor.

Optionally, the computer system 2000 further includes a bus. The bus is configured to perform transmission of information between the components of the computer system 2000. The bus may be a peripheral component interconnect (peripheral component interconnect, PCI) bus or an extended industry standard architecture (extended industry standard architecture, EISA) bus, or the like. The bus may be classified into an address bus, a data bus, a control bus, and the like. For ease of representation, the bus is represented by using only one bold line in FIG. 20. However, it does not mean that there is only one bus or one type of bus.

The memory 2003 is, for example, a read-only memory (read-only memory, ROM) or another type of static storage device that can store static information and instructions, or a random access memory (random access memory, RAM) or another type of dynamic storage device that can store information and instructions, or an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, and the like), a magnetic disk storage medium or another magnetic storage device, or any other medium that can be used to carry or store expected program code in a form of instructions or a data structure and that can be accessed by a computer, but is not limited thereto. For example, the memory 2003 exists independently, and is connected to the processor 2001 through the bus. Alternatively, the memory 2003 may be integrated with the processor 2001.

The communication interface 2004 is any apparatus such as a transceiver, and is configured to communicate with another device or a communication network. The communication network may be an Ethernet, a radio access network (radio access network, RAN), a wireless local area network (wireless local area network, WLAN), or the like. The communication interface 2004 may include a wired communication interface, and may further include a wireless communication interface. Specifically, the communication interface 2004 may be an Ethernet (Ethernet) interface, a fast Ethernet (fast Ethernet, FE) interface, a gigabit Ethernet (gigabit Ethernet, GE) interface, an asynchronous transfer mode (asynchronous transfer mode, ATM) interface, a WLAN interface, a cellular network communication interface, or a combination thereof. The Ethernet interface may be an optical interface, an electrical interface, or a combination thereof. In this embodiment of this application, the communication interface 2004 may be used by the computer system 2000 to communicate with another device.

During specific implementation, in an embodiment, the processor 2001 may include one or more CPUs, for example, a CPU 0 and a CPU 1 shown in FIG. 20. Each of the processors may be a single-core (single-CPU) processor, or may be a multi-core (multi-CPU) processor. The processor herein may be one or more devices, circuits, and/or processing cores configured to process data (for example, computer program instructions).

During specific implementation, in an embodiment, the computer system 2000 may include multiple processors, for example, the processor 2001 and the processor 2005 shown in FIG. 20. Each of the processors may be a single-core processor (single-CPU), or may be a multi-core processor (multi-CPU). The processor herein may be one or more devices, circuits, and/or processing cores configured to process data (for example, computer program instructions).

During specific implementation, in an embodiment, the computer system 2000 may further include an output device and an input device. The output device communicates with the processor 2001, and may display information in multiple manners. For example, the output device may be a liquid crystal display (liquid crystal display, LCD), a light-emitting diode (light-emitting diode, LED) display device, a cathode ray tube (cathode ray tube, CRT) display device, a projector (projector), or the like. The input device communicates with the processor 2001, and may receive an input from a user in multiple manners. For example, the input device may be a mouse, a keyboard, a touchscreen device, or a sensing device.

In some embodiments, the memory 2003 is configured to store program code 2010, and the processor 2001 may execute the program code 2010 stored in the memory 2003. The program code 2010 may include one or more software modules. Optionally, the processor 2001 may also store program code or instructions.

In a specific embodiment, the computer system 2000 in this embodiment of this application may include the MAC functional module and/or the PHY functional module in the foregoing method embodiments. The MAC functional module and/or the PHY functional module may be implemented by using the processor 2001 in the computer system 2000.

The computer system 2000 may further correspond to the apparatuses shown in FIG. 18 and FIG. 19. Each functional module in the apparatus shown in FIG. 18 or FIG. 19 may be implemented by using a circuit in the processor 2000.

The steps of the encoding method shown in FIG. 2 and the decoding method shown in FIG. 14 are completed by using an integrated logic circuit of hardware in the processor of the computer system 2000. The steps of the methods disclosed with reference to embodiments of this application may be directly performed and completed by a hardware processor.

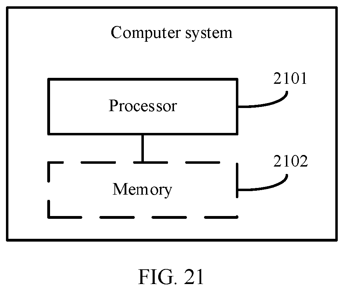

FIG. 21 is a diagram of a structure of another computer system according to an embodiment of this application. The computer system is configured to perform the encoding method shown in FIG. 2 and the decoding method shown in FIG. 14. For example, the computer system is a server. The server may vary greatly due to different configurations or performance. The computer system may include one or more processors 2101. The one or more processors 2101 are configured to implement the MAC functional module and/or the PHY functional module in the method embodiments. As shown in FIG. 21, the computer system may further include one or more memories 2102. The one or more memories 2102 store at least one computer program, and the at least one computer program is loaded and executed by the one or more processors 2101. For example, the processor 2101 is a CPU. Certainly, the computer system may further include components such as a wired or wireless network interface, a keyboard, and an input/output interface, to perform input/output. The computer system may further include another component configured to implement a device function. Details are not described herein.

An embodiment of this application further provides a communication apparatus. The apparatus includes: a transceiver module, configured to perform a receiving and/or sending related operation in the encoding method shown in FIG. 2; and a processing module, configured to perform another operation other than the receiving and/or sending related operation in the encoding method shown in FIG. 2. An embodiment of this application further provides another communication apparatus. The apparatus includes: a transceiver module, configured to perform a receiving and/or sending related operation in the decoding method shown in FIG. 14; and a processing module, configured to perform another operation other than the receiving and/or sending related operation in the decoding method shown in FIG. 14. An embodiment of this application provides still another communication apparatus. The apparatus includes a MAC layer circuit, where the MAC layer circuit is configured to perform the encoding method shown in FIG. 2 and/or the decoding method shown in FIG. 14. An embodiment of this application provides still another communication apparatus. The apparatus includes a PHY circuit, where the PHY circuit is configured to perform the encoding method shown in FIG. 2 and/or the decoding method shown in FIG. 14.

The foregoing encoding apparatus, decoding apparatus, and communication apparatuses may all be chips or communication devices.

An embodiment of this application provides a chip. The chip includes a MAC layer circuit, where the MAC layer circuit is configured to perform the encoding method shown in FIG. 2 and/or the decoding method shown in FIG. 14. An embodiment of this application further provides another chip. The chip includes: a PHY circuit, where the PHY circuit is configured to perform the encoding method shown in FIG. 2 and/or the decoding method shown in FIG. 14.

An embodiment of this application further provides a communication system. The communication system includes a MAC layer circuit and a PHY circuit. The MAC layer circuit is configured to perform the encoding method shown in FIG. 2, and the PHY circuit is configured to perform the decoding method shown in FIG. 14. Alternatively, the PHY circuit is configured to perform the encoding method shown in FIG. 2, and the MAC layer circuit is configured to perform the decoding method shown in FIG. 14. The communication system may be implemented by using a chip or a communication device.

It should be understood that the processor may be a CPU, or may be another general-purpose processor, a DSP, an ASIC, an FPGA, or another programmable logic device, a discrete gate or a transistor logic device, a discrete hardware component, or the like. The general-purpose processor may be a microprocessor or any conventional processor or the like. It should be noted that the processor may be a processor that supports an advanced reduced instruction set computer machines (advanced RISC machines, ARM) architecture.

Further, in an optional embodiment, if one or more of the computer system, the communication apparatus, the chip, or the communication system further includes a memory, the memory may include a read-only memory and a random access memory, and provide instructions and data for the processor. The memory may further include a nonvolatile random access memory. For example, the memory may further store information of a device type.

The memory may be a volatile memory or a non-volatile memory, or may include both a volatile memory and a non-volatile memory. The non-volatile memory may be a ROM, a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a RAM, and serves as an external cache. As an example description rather than a limitative description, many forms of RAMs may be used, for example, a static random access memory (static RAM, SRAM), a dynamic random access memory (dynamic random access memory, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

All or some of the foregoing embodiments may be implemented by using software, hardware, firmware, or any combination thereof. When the software is used for the implementation, all or some of embodiments may be implemented in a form of a computer program or a computer program product. The computer program or the computer program product includes one or more computer instructions. When the computer program instructions are loaded and executed on a computer, the procedures or functions according to this application are completely or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by a computer, or a data storage device like a server or a data center, integrating one or more usable media. The usable medium may be a magnetic medium (for example, a floppy disk, a hard disk drive, or a magnetic tape), an optical medium (for example, a digital video disc (digital video disc, DVD)), or a semiconductor medium (for example, a solid-state drive (solid-state drive, SSD)), or the like.

To clearly describe the interchangeability of hardware and software, the steps and composition of embodiments have been generally described in the foregoing descriptions in terms of functions. Whether the functions are performed by hardware or software depends on particular applications and design constraint conditions of the technical solutions. A person of ordinary skill in the art may use different methods to implement the described functions for each particular application, but it should not be considered that the implementation goes beyond the scope of this application.

Computer program code used to implement the method in embodiments of this application may be written in one or more programming languages. The computer program code may be provided for a processor of a general-purpose computer, a dedicated computer, or another programmable apparatus for storing annotation content, so that when the program code is executed by the computer or the another programmable apparatus for storing annotation content, functions/operations specified in the flowcharts and/or block diagrams are implemented. The program code may be executed entirely on a computer, partly on a computer, as a standalone software package, partly on a computer and partly on a remote computer, or entirely on a remote computer or a server.

In a context of embodiments of this application, the computer program code or related data may be carried on any appropriate carrier, so that a device, an apparatus, or a processor can perform various processing and operations described above. Examples of the carrier include a signal, a computer-readable medium, and the like. Examples of the signal may include propagating signals in electrical, optical, radio, sound, or other forms, such as carrier waves and infrared signals.

It may be clearly understood by a person skilled in the art that, for the purpose of convenient and brief description, for a detailed working process of the foregoing system, device, and module, refer to a corresponding process in the foregoing method embodiment. Details are not described herein.

In the several embodiments provided in this application, it should be understood that the disclosed system, device, and method may be implemented in other manners. For example, the described device embodiment is merely an example. For example, division into the modules is merely logical function division and may be other division during actual implementation. For example, multiple modules or components may be combined or integrated into another system, or some features may be ignored or not performed. In addition, the displayed or discussed mutual couplings or direct couplings or communication connections may be implemented through some interfaces. Indirect couplings or communication connections between the devices or modules may be electrical connections, mechanical connections, or connections in other forms.

The modules described as separate parts may or may not be physically separate, and parts displayed as modules may or may not be physical modules, may be located in one position, or may be distributed on multiple network modules. Some or all of the modules may be selected based on actual requirements to achieve the objectives of the solutions in embodiments of this application.

In addition, functional modules in embodiments of this application may be integrated into one processing module, or each of the modules may exist alone physically, or two or more modules may be integrated into one module. The integrated module may be implemented in a form of hardware, or may be implemented in a form of a software functional module.

In this application, the terms "first", "second", and the like are used to distinguish between same or similar items whose effects and functions are basically the same. It should be understood that there is no logical or time-sequence dependency between "first", "second", and "n^{th}", and a quantity and an execution sequence are not limited. It should be further understood that although terms such as "first" and "second" are used in the following descriptions to describe various elements, these elements should not be limited by the terms. These terms are merely used to distinguish one element from another element. For example, without departing from the scope of various examples, a first block may be referred to as a second block, and similarly, a second block may be referred to as a first block.

It should be further understood that sequence numbers of processes do not mean execution sequences in embodiments of this application. The execution sequences of the processes should be determined based on functions and internal logic of the processes, and should not be construed as any limitation on the implementation processes of embodiments of this application.

In this application, the term "at least one" means one or more, and the term "multiple" means two or more. For example, multiple range locks mean two or more range locks. The terms "system" and "network" may be often used interchangeably in this specification.

It should be understood that the terms used in the descriptions of the various examples in this specification are merely intended to describe specific examples but are not intended to constitute a limitation. The terms "one" ("a" and "an") and "the" of singular forms used in the descriptions of various examples and the appended claims are also intended to include plural forms, unless otherwise specified in the context clearly. It should be further understood that when being used in this specification, the term "include" (also referred to as "includes", "including", "comprises", and/or "comprising") specifies presence of stated features, integers, steps, operations, elements, and/or components, but does not preclude presence or addition of one or more other features, integers, steps, operations, elements, components, and/or groups thereof. It should be further understood that, according to the context, the phrase "if it is determined that" or "if (a stated condition or event) is detected" may be interpreted as a meaning of "when it is determined that" or "in response to determining" or "when (a stated condition or event) is detected" or "in response to detecting (a stated condition or event)".

It should be understood that determining B based on A does not mean that B is determined based only on A, but B may alternatively be determined based on A and/or other information. It should be further understood that "one embodiment", "an embodiment", or "a possible implementation" mentioned throughout this specification means that particular features, structures, or characteristics related to the embodiments or implementations are included in at least one embodiment of this application. Therefore, "in one embodiment", "in an embodiment", or "in a possible implementation" appearing throughout this specification does not necessarily mean a same embodiment. In addition, these particular features, structures, or characteristics may be combined in one or more embodiments in any appropriate manner.

The foregoing descriptions are merely optional embodiments of this application, but are not intended to limit this application. Any modification, equivalent replacement, or improvement made without departing from the principle of this application should fall within the protection scope of this application.

## Claims

1. An encoding method, comprising:
sending a block pair through one serial channel, wherein the block pair comprises a first block and a second block, a length of the first block is the same as a length of the second block, and the first block indicates a type of the second block.

2. The method according to claim 1, wherein that the first block indicates the type of the second block comprises:
if the first block is a data block, it indicates that the second block is a data block.

3. The method according to claim 1 or 2, wherein that the first block indicates the type of the second block comprises:
if the first block is a control block with a value of a first value, it indicates that the second block is a control block.

4. The method according to any one of claims 1 to 3, wherein that the first block indicates the type of the second block comprises:
if the first block is a control block with a value of a second value, it indicates that the second block is a management block.

5. The method according to any one of claims 1 to 4, wherein that the first block indicates the type of the second block comprises:
if the first block is a control block with a value of a third value, it indicates that the second block is a data block.

6. The method according to any one of claims 1 to 5, wherein that the first block indicates the type of the second block comprises:
if the first block is a control block with a value of a fourth value, it indicates that the second block indicates collision detection (COL) and carrier sense (CRS) in a bitmap manner.

7. The method according to claim 1, wherein the first block is a J code block, and the second block is a K code block; or
the first block is a T code block, and the second block is an R code block.

8. The method according to claim 7, wherein a block pair comprising the J code block and the K code block indicates a start-of-stream delimiter (SSD), and a block pair comprising the T code block and the R code block indicates an end-of-stream delimiter (ESD).

9. The method according to any one of claims 1 to 8, wherein the second block comprises a management signal.

10. The method according to claim 9, wherein the management signal occupies 1 bit.

11. The method according to any one of claims 1 to 10, wherein both the length of the first block and the length of the second block are 5 bits.

12. The method according to any one of claims 1 to 11, wherein the first block is encoded using a 4B/5B scheme.

13. The method according to any one of claims 1 to 6, wherein the first block is encoded using an 8B/10B scheme.

14. The method according to claim 13, wherein the second block comprises a management signal, and the management signal occupies 1 bit or 2 bits.

15. The method according to claim 9, wherein
the first block is a data block, and the second block comprises a 4-bit data signal and a 1-bit management signal; or
the first block is a control block, and the second block comprises a 4-bit data signal and a 1-bit management signal; or
the first block is a control block, and the second block comprises a 4-bit control signal and a 1-bit management signal.

16. The method according to any one of claims 1 to 15, wherein the serial channel is implemented based on a media independent interface (MII).

17. The method according to any one of claims 1 to 16, wherein sending the block pair through one serial channel comprises:
sending the block pair from a medium access control (MAC) layer to a physical layer (PHY) through one serial channel.

18. The method according to any one of claims 1 to 16, wherein sending the block pair through one serial channel comprises:
sending the block pair from a physical layer (PHY) to a medium access control (MAC) layer through one serial channel.

19. A decoding method, comprising:
receiving a block pair through one serial channel, wherein the block pair comprises a first block and a second block, a length of the first block is the same as a length of the second block, and the first block indicates a type of the second block.

20. The method according to claim 19, wherein that the first block indicates the type of the second block comprises:
if the first block is a data block, it indicates that the second block is a data block.

21. The method according to claim 19 or 20, wherein that the first block indicates the type of the second block comprises:
if the first block is a control block with a value of a first value, it indicates that the second block is a control block.

22. The method according to any one of claims 19 to 21, wherein that the first block indicates the type of the second block comprises:
if the first block is a control block with a value of a second value, it indicates that the second block is a management block.

23. The method according to any one of claims 19 to 22, wherein that the first block indicates the type of the second block comprises:
if the first block is a control block with a value of a third value, it indicates that the second block is a data block.

24. The method according to any one of claims 19 to 23, wherein that the first block indicates the type of the second block comprises:
if the first block is a control block with a value of a fourth value, it indicates that the second block indicates collision detection (COL) and carrier sense (CRS) in a bitmap manner.

25. The method according to claim 19, wherein the first block is a J code block, and the second block is a K code block; or
the first block is a T code block, and the second block is an R code block.

26. The method according to claim 25, wherein a block pair comprising the J code block and the K code block indicates a start-of-stream delimiter (SSD), and a block pair comprising the T code block and the R code block indicates an end-of-stream delimiter (ESD).

27. The method according to any one of claims 19 to 26, wherein the second block comprises a management signal.

28. The method according to claim 27, wherein the management signal occupies 1 bit.

29. The method according to any one of claims 19 to 28, wherein both the length of the first block and the length of the second block are 5 bits.

30. The method according to any one of claims 19 to 29, wherein the first block is encoded using a 4B/5B scheme.

31. The method according to any one of claims 19 to 24, wherein the first block is encoded using an 8B/10B scheme.

32. The method according to claim 31, wherein the second block comprises a management signal, and the management signal occupies 1 bit or 2 bits.

33. The method according to claim 27, wherein
the first block is a data block, and the second block comprises a 4-bit data signal and a 1-bit management signal; or
the first block is a control block, and the second block comprises a 4-bit data signal and a 1-bit management signal; or
the first block is a control block, and the second block comprises a 4-bit control signal and a 1-bit management signal.

34. The method according to any one of claims 19 to 33, wherein the serial channel is implemented based on a media independent interface (MII).

35. The method according to any one of claims 19 to 34, wherein receiving the block pair through one serial channel comprises:
receiving, from a medium access control (MAC) layer, the block pair sent by a physical layer (PHY) through one serial channel.

36. The method according to any one of claims 19 to 34, wherein sending the block pair through one serial channel comprises:
receiving, from a physical layer (PHY), the block pair sent by a medium access control (MAC) layer through one serial channel.

37. An encoding apparatus, comprising:
an encoding module, configured to send a block pair through one serial channel, wherein the block pair comprises a first block and a second block, a length of the first block is the same as a length of the second block, and the first block indicates a type of the second block.

38. The apparatus according to claim 37, wherein that the first block indicates the type of the second block comprises:
if the first block is a data block, it indicates that the second block is a data block.

39. The apparatus according to claim 37 or 38, wherein that the first block indicates the type of the second block comprises:
if the first block is a control block with a value of a first value, it indicates that the second block is a control block.

40. The apparatus according to any one of claims 37 to 39, wherein that the first block indicates the type of the second block comprises:
if the first block is a control block with a value of a second value, it indicates that the second block is a management block.

41. The apparatus according to any one of claims 37 to 40, wherein that the first block indicates the type of the second block comprises:
if the first block is a control block with a value of a third value, it indicates that the second block is a data block.

42. The apparatus according to any one of claims 37 to 41, wherein that the first block indicates the type of the second block comprises:
if the first block is a control block with a value of a fourth value, it indicates that the second block indicates collision detection (COL) and carrier sense (CRS) in a bitmap manner.

43. The apparatus according to claim 37, wherein the first block is a J code block, and the second block is a K code block; or
the first block is a T code block, and the second block is an R code block.

44. The apparatus according to claim 43, wherein a block pair comprising the J code block and the K code block indicates a start-of-stream delimiter (SSD), and a block pair comprising the T code block and the R code block indicates an end-of-stream delimiter (ESD).

45. The apparatus according to any one of claims 37 to 44, wherein the second block comprises a management signal.

46. The apparatus according to claim 45, wherein the management signal occupies 1 bit.

47. The apparatus according to any one of claims 37 to 46, wherein both the length of the first block and the length of the second block are 5 bits.

48. The apparatus according to any one of claims 37 to 47, wherein the first block is encoded using a 4B/5B scheme.

49. The apparatus according to any one of claims 37 to 42, wherein the first block is encoded using an 8B/10B scheme.

50. The apparatus according to claim 49, wherein the second block comprises a management signal, and the management signal occupies 1 bit or 2 bits.

51. The apparatus according to claim 45, wherein
the first block is a data block, and the second block comprises a 4-bit data signal and a 1-bit management signal; or
the first block is a control block, and the second block comprises a 4-bit data signal and a 1-bit management signal; or
the first block is a control block, and the second block comprises a 4-bit control signal and a 1-bit management signal.

52. The apparatus according to any one of claims 37 to 51, wherein the serial channel is implemented based on a media independent interface (MII).

53. The apparatus according to any one of claims 37 to 52, wherein the encoding module is configured to send the block pair from a medium access control (MAC) layer to a physical layer (PHY) through one serial channel.

54. The apparatus according to any one of claims 37 to 52, wherein the encoding module is configured to send the block pair from a physical layer (PHY) to a medium access control (MAC) layer through one serial channel.

55. A decoding apparatus, comprising:
a decoding module, configured to receive a block pair through one serial channel, wherein the block pair comprises a first block and a second block, a length of the first block is the same as a length of the second block, and the first block indicates a type of the second block.

56. The apparatus according to claim 55, wherein that the first block indicates the type of the second block comprises:
if the first block is a data block, it indicates that the second block is a data block.

57. The apparatus according to claim 55 or 56, wherein that the first block indicates the type of the second block comprises:
if the first block is a control block with a value of a first value, it indicates that the second block is a control block.

58. The apparatus according to any one of claims 55 to 57, wherein that the first block indicates the type of the second block comprises:
if the first block is a control block with a value of a second value, it indicates that the second block is a management block.

59. The apparatus according to any one of claims 55 to 58, wherein that the first block indicates the type of the second block comprises:
if the first block is a control block with a value of a third value, it indicates that the second block is a data block.

60. The apparatus according to any one of claims 55 to 59, wherein that the first block indicates the type of the second block comprises:
if the first block is a control block with a value of a fourth value, it indicates that the second block indicates collision detection (COL) and carrier sense (CRS) in a bitmap manner.

61. The apparatus according to claim 55, wherein the first block is a J code block, and the second block is a K code block; or
the first block is a T code block, and the second block is an R code block.

62. The apparatus according to claim 61, wherein a block pair comprising the J code block and the K code block indicates a start-of-stream delimiter (SSD), and a block pair comprising the T code block and the R code block indicates an end-of-stream delimiter (ESD).

63. The apparatus according to any one of claims 55 to 62, wherein the second block comprises a management signal.

64. The apparatus according to claim 63, wherein the management signal occupies 1 bit.

65. The apparatus according to any one of claims 55 to 64, wherein both the length of the first block and the length of the second block are 5 bits.

66. The apparatus according to any one of claims 55 to 65, wherein the first block is encoded using a 4B/5B scheme.

67. The apparatus according to any one of claims 55 to 60, wherein the first block is encoded using an 8B/10B scheme.

68. The apparatus according to claim 67, wherein the second block comprises a management signal, and the management signal occupies 1 bit or 2 bits.

69. The apparatus according to claim 63, wherein
the first block is a data block, and the second block comprises a 4-bit data signal and a 1-bit management signal; or
the first block is a control block, and the second block comprises a 4-bit data signal and a 1-bit management signal; or
the first block is a control block, and the second block comprises a 4-bit control signal and a 1-bit management signal.

70. The apparatus according to any one of claims 55 to 69, wherein the serial channel is implemented based on a media independent interface (MII).

71. The apparatus according to any one of claims 55 to 70, wherein the decoding module is configured to receive, from a medium access control (MAC) layer, the block pair sent by a physical layer (PHY) through one serial channel.

72. The apparatus according to any one of claims 55 to 70, wherein the decoding module is configured to receive, from a physical layer (PHY), the block pair sent by a medium access control MAC layer through one serial channel.

73. A communication apparatus, comprising a medium access control (MAC) layer circuit, wherein the MAC layer circuit is configured to perform the encoding method according to any one of claims 1 to 17 or the decoding method according to any one of claims 19 to 35.

74. A communication apparatus, comprising a physical layer (PHY) circuit, wherein the PHY circuit is configured to perform the encoding method according to any one of claims 1 to 16 and claim 18 or the decoding method according to any one of claims 19 to 34 and claim 36.

75. A chip, comprising a medium access control (MAC) layer circuit, wherein the MAC layer circuit is configured to perform the encoding method according to any one of claims 1 to 17 or the decoding method according to any one of claims 19 to 35.

76. A chip, comprising a physical layer (PHY) circuit, wherein the PHY circuit is configured to perform the encoding method according to any one of claims 1 to 16 and claim 18 or the decoding method according to any one of claims 19 to 34 and claim 36.

77. A communication system, comprising a medium access control (MAC) layer circuit and a physical layer (PHY) circuit, wherein the MAC layer circuit is configured to perform the encoding method according to any one of claims 1 to 17, and the PHY circuit is configured to perform the decoding method according to any one of claims 19 to 34 and claim 36; or the PHY circuit is configured to perform the encoding method according to any one of claims 1 to 16 and claim 18, and the MAC layer circuit is configured to perform the decoding method according to any one of claims 19 to 35.
